# EUROPEAN PATENT APPLICATION

(11) **EP 1 810 814 A1**
(43) Date of publication of application: **25.07.2007**
(21) Application number: 05795565.0
(22) Date of filing: 21.10.2005
(51) Int. Cl.: B29C 63/36, F16L 1/00, F16L 55/16, B29L 9/00, B29L 23/00

(54) **METHOD AND DEVICE FOR REVERSING PIPE LINING MATERIAL AND CONDUIT RESTORING METHOD USING REVERSING DEVICE**

(30) Priority: 28.10.2004 JP 2004313204
(71) Applicant: SHONAN GOSEI - JUSHI SEISAKUSHO K.K., Hiratsuka-shi, Kanagawa-ken, 254-0807 (JP)
(72) Inventor: KANETA, Koji, Shonan Gosei-Jushi Seisakusho K.K., Kanagawa 2540807 (JP); KAMIYAMA, Takao, Shonan Gosei-Jushi Seisakusho K.K, Kanagawa 2540807 (JP); FUJII, Kenji, Shonan Gosei-Jushi Seisakusho K.K., Kanagawa 2540807 (JP); ARIGA, Teruo, Kokudo Koki K.K.,, Kanagawa 2430303 (JP)
(74) Representative: Kronthaler, Wolfgang N.K.
(86) International application number: PCT/JP2005/019372
(87) International publication number: WO 2006/046478

(57) **Abstract**

A tubular pipe lining material 1 is guided to first and second pressure chambers 50 and 55 and attached to an eversion nozzle 55a that is provided at the lower end of the second pressure chamber. The pipe lining material is held by a holding jack 21 of the first pressure chamber, and is drawn into the second pressure chamber by the lowering of the first pressure chamber. When a prescribed length of the pipe lining material has been fed into the pressure chamber, the second pressure chamber is airtightly sealed, and the pipe lining material is everted and drawn out through the eversion nozzle by the action of fluid pressure in the second pressure chamber. Thereafter, the first pressure chamber is raised, and the same operation is repeated to successively evert and draw out the pipe lining material from the second pressure chamber.

## Description

### Technical Field

The present invention relates to a method and apparatus for everting a pipe lining material that is everted and inserted inside a pipeline to be lined, and a construction method for rehabilitating the pipeline in which the eversion apparatus is used to evert and insert the pipe lining material into an existing pipe.

### Background Art

A pipe lining construction method has been proposed and is already offered for practical application for cases in which a pipeline, such as a sewer pipe, a gas pipe, a communications cable duct, an electric power cable duct and the like, that is buried underground, has deteriorated. With this method, the pipeline is repaired by lining the inner surface thereof without digging up the pipeline.

As one example of the abovementioned pipe lining method, it is known to carry out construction using a pipe lining material made of a tubular resin adsorbing material impregnated with an uncured liquid setting resin with its outer surface coated airtightly with a plastic film. In this construction method, an eversion apparatus is used to evert and insert the pipe lining material inside the pipeline by fluid pressure. The pipe lining material is then inflated by the fluid pressure and pressed against the inner surface of the pipeline, and this state is maintained in order to cure the setting resin impregnated in the pipe lining material.

Normally, the pipe lining material is flattened and stored in a sealed container in a folded state with one end of the pipe lining material drawn out and attached to the outer circumference of the open end of an eversion nozzle that is connected to the sealed container, and fluid pressure is applied inside the sealed container to insert the pipe lining material while everting it (Patent Document 1: Japanese Patent Laid Open Publication No. 2003-165158).

A compact eversion apparatus is also known (Patent Document 2: Japanese Patent Laid Open Publication No. 1993-504523 (WO92/05944)), wherein a high fluid pressure is generated at a transit port, through which the pipe lining material passes, to reduce the diameter of the transit port, and the pipe lining material is caused to pass through the diameter-reduced transit port in frictional contact therewith, thereby providing the transit port with a sealed structure to evert the pipe lining material.

### Disclosure of Invention

### Problems to be Solved by the Invention

With the structure as described in Patent Document 1, fluid pressure is generated inside a sealed container that stores the pipe lining material, and the pipe lining material is drawn out of the sealed container and everted through the eversion nozzle. Therefore, increased manufacturing cost becomes a factor of consideration because the overall eversion apparatus becomes large-sized, and the entirety thereof must be made a sealed structure.

On the other hand, the constitution as described in Patent Document 2 requires only a small space to be made a sealed structure, but the transit port through which the pipe lining material passes must be made a sealed structure. This disadvantageously makes the sealed structure incomplete, and there is a problem in that the pipe lining material gets damaged because the pipe lining material passes through the transit port while making frictional contact therewith.

The present invention was created to solve such problems, and it is therefore an object of the present invention to provide a method and apparatus for everting a pipe lining material, wherein only a small space portion needs to be made sealed or air tight, and the pipe lining material can be everted with a reliable sealed structure; and to provide a construction method for rehabilitating a pipeline using the eversion apparatus.

### Means for Solving the Problems

The present invention (claim 1) is characterized by a method for everting a pipe lining material in which a tubular pipe lining material is attached at its one end to the tip of an eversion nozzle and everted through the eversion nozzle by the action of fluid pressure, comprising the steps of:
providing a pressure chamber, which has a sealed structure and is provided with the eversion nozzle, with a transit port through which the pipe lining material passes;
passing the pipe lining material through the transit port and attaching one end of the pipe lining material to the eversion nozzle;
holding the pipe lining material at a first position by a holding means;
moving the holding means to a second position to draw the pipe lining material held by the holding means into the pressure chamber through the transit port;
sealing the transit port of the pressure chamber when the holding means has moved to the second position; and
applying the fluid pressure to the sealed pressure chamber to evert and draw out from the pressure chamber through the eversion nozzle the pipe lining material, which was drawn into the pressure chamber.

In addition, the present invention (claim 4) is characterized by a method for everting a pipe lining material in which a tubular pipe lining material is attached at its one end to the tip of an eversion nozzle and everted through the eversion nozzle by the action of fluid pressure, comprising the steps of:
providing a first pressure chamber on which a holding means for holding the pipe lining material is mounted, and a second pressure chamber which has a sealed structure and is provided with the eversion nozzle;
forming at a position on the side opposite the eversion nozzle of the second pressure chamber a transit port through which the pipe lining material passes;
passing the pipe lining material through the transit ports of the first and second pressure chambers and attaching one end of the pipe lining material to the eversion nozzle;
holding the pipe lining material by the holding means in the first pressure chamber;
moving the first pressure chamber from a first position to a second position in the direction of the second pressure chamber to draw the pipe lining material, which is held by the holding means of the first pressure chamber, through the transit port of the second pressure chamber into the second pressure chamber;
sealing the transit port of the second pressure chamber when the first pressure chamber has moved to the second position; and
applying the fluid pressure to the sealed second pressure chamber to evert and draw out from the second pressure chamber through the eversion nozzle the pipe lining material, which was drawn into the second pressure chamber.

In addition, the present invention (claim 8) is characterized by an apparatus for everting a pipe lining material in which a tubular pipe lining material is attached at its one end to the tip of an eversion nozzle and everted through the eversion nozzle by the action of fluid pressure, comprising:
a sealable pressure chamber provided at a position on the side opposite the eversion nozzle with a transit port through which the pipe lining material passes;
a holding means for holing the pipe lining material at a first position;
a means for moving the holding means to a second position so that the pipe lining material, which is held by the holding means, is drawn into the pressure chamber through the transit port;
a sealing means that seals the transit port of the pressure chamber when the holding means moves to the second position; and
a fluid pressure supplying means that supplies fluid pressure to the sealed pressure chamber;
wherein the pipe lining material, which was drawn into the pressure chamber, is everted and drawn out from the pressure chamber through the eversion nozzle by the action of the fluid pressure.

In addition, the present invention (claim 11) is characterized by an apparatus for everting a pipe lining material in which a tubular pipe lining material is attached at its one end to the tip of an eversion nozzle and everted through the eversion nozzle by the action of fluid pressure, comprising:
a first pressure chamber on which a holding means that holds the pipe lining material is mounted;
a sealable second pressure chamber provided at a position on the side opposite the eversion nozzle with a transit port through which the pipe lining material passes;
a means for moving the first pressure chamber from a first position to a second position in the direction of the second pressure chamber so that the pipe lining material, which is held by the holding means of the first pressure chamber, is drawn into the second pressure chamber through the transit port of the second pressure chamber;
a sealing means that seals the transit port of the second pressure chamber when the first pressure chamber moves to the second position; and
a fluid pressure supplying means that supplies fluid pressure to the sealed second pressure chamber;
wherein the pipe lining material, which was drawn into the second pressure chamber, is everted and drawn out from the second pressure chamber through the eversion nozzle by the action of the fluid pressure.

In addition, the present invention (claim 15) is characterized by a construction method for rehabilitating a pipeline in which the eversion apparatus as set forth in claim 8 or 11 is used to evert a pipe lining material and insert it into an existing pipeline, comprising the steps of:
disposing the eversion apparatus above a manhole so that a movement direction of the holding means orients to a vertical direction;
inserting into the manhole the pipe lining material which has been successively everted and drawn out from the eversion nozzle of the eversion apparatus in accordance with the movement of the holding means or the first pressure chamber between the first and second positions;
changing the orientation of the pipe lining material from the vertical direction to the horizontal direction to insert the pipe lining material, which was inserted into the manhole, into the pipeline to be rehabilitated; and
rehabilitating the inner surface of the pipeline by the pipe lining material.

In addition, the present invention (claim 16) is characterized by a construction method for rehabilitating a pipeline in which the eversion apparatus as set forth in claim 8 or 11 is used to evert a pipe lining material and insert it into an existing pipeline, comprising the steps of:
disposing the eversion apparatus inside a manhole so that a movement direction of the holding means orients to a horizontal direction;
inserting into the pipeline to be rehabilitated the pipe lining material which has been successively everted and drawn out from the eversion nozzle of the eversion apparatus in accordance with the movement of the holding means or the first pressure chamber between the first and second positions; and
rehabilitating the inner surface of the pipeline by the pipe lining material.

### Effects of the Invention

Because the pressure chamber for everting the pipe lining material in the present invention requires only the minimal space corresponding to the lower part pressure chamber, the portion to be made a sealed structure is reduced, and it is thereby possible to effectively evert the pipe lining material with a reliable sealed structure and with a low cost configuration.

In addition, because the process of drawing the pipe lining material into the pressure chamber is isolated from the process of everting and drawing out the pipe lining material that was drawn in, the pipe lining material does not make contact with any portion inside the pressure chamber when it is being everted and drawn out, thereby reducing the risk of damage to the pipe lining material. In addition, because the pipe lining material is drawn in by the amount of the stroke of the pressure chamber or the holding means, only that amount of the pipe lining material is everted and drawn out, which makes the eversion operation more reliable than everting a large amount of the pipe lining material all at once.

### Brief Description of Drawings

FIG. 1 is a front view showing the entire eversion apparatus of the present invention with the casing shown as a cross section.
FIG. 2 is a side view of the interior of the casing of the eversion apparatus, viewed from the X direction of FIG. 1.
FIG. 3 is a cross sectional view, taken along the Y-Y' line of FIG. 2, showing the interior of the casing of the eversion apparatus.
FIG. 4a is a cross sectional view, taken along the A-A' line in FIG. 3, for the case when the holding jack is in the release position.
FIG. 4b is a cross sectional view, taken along the same line, for the case when the holding jack is in the holding position.
FIG. 5a is a cross sectional view, taken along the B-B' line in FIG. 3, for the case when the transit port, through which the pipe lining material passes, is in the open state.
FIG. 5b is a cross sectional view, taken along the same line, for the case when the same transit port is in the sealed state.
FIG. 6a is a top view, viewed in a direction from the upper part pressure chamber to the lower part pressure chamber, showing a sealed box, the inside of which is provided with air bags.
FIG. 6b is a top view, corresponding to FIG. 6a, for the case when the air bags are inflated.
FIG. 6c is a cross sectional view taken along the C-C' line in FIG. 6a.
FIG. 6d is a cross sectional view taken along the D-D' line in FIG. 6a.
FIG. 6e is a cross sectional view taken along the E-E' line in FIG. 6c.
FIG. 7 is a system diagram showing a system that supplies the air pressure and the oil pressure to the eversion apparatus.
FIG. 8a through FIG. 8f are an explanatory diagram showing the process of everting the pipe lining material by the eversion apparatus.
FIG. 9 is a cross sectional view, which corresponds to FIG. 3, for the case when the upper part pressure chamber has been moved to the lowest position.
FIG. 10 is a cross sectional view, which corresponds to FIG. 9, for the case when the pipe lining material is everted and drawn out from the lower part pressure chamber.
FIG. 11 is a cross sectional view, which corresponds to FIG. 10, for the case when the upper part pressure chamber has been raised from the state shown in FIG. 9 to the highest position.
FIG. 12 is an explanatory diagram showing a state wherein the existing pipeline is rehabilitated using the eversion apparatus of the present invention.
FIG. 13a is a top view, which corresponds to FIG. 6a, wherein air bags are further provided on the two side surfaces of the sealed box.
FIG. 13b is a top view, which corresponds to FIG. 6b, for the case when each of the air bags is inflated.

### Description of Symbols

- 10: Eversion apparatus
- 21: Holding jack
- 23, 26: Holding members
- 27: Proximity switch
- 31: Sealing plate
- 31a: Transit port
- 33: Sealed box
- 34,35,37,38: Air bags
- 41: Sealing plate
- 41a: Transit port
- 43: Sealed box
- 44, 45: Air bags
- 50: Upper part pressure chamber
- 51, 52, 53: Lift jacks
- 55: Lower part pressure chamber
- 61: Holding jack
- 63, 66: Holding members
- 67, 71, 72, 73, 74: Proximity switches
- 80: Sealing member

### Best Mode for Carrying Out the Invention

In the present invention fluid pressure is used to evert a tubular pipe lining material whose one end is attached to the tip of an eversion nozzle. In the invention, the pipe lining material is held by a holding means, drawn through a transit port into a pressure chamber, which has a sealed structure and is provided with an eversion nozzle, and a prescribed length of the pipe lining material is fed into the pressure chamber, whereupon the transit port is airtightly sealed by a sealing means, and the pipe lining material, which was drawn into the pressure chamber, is everted and drawn out from the pressure chamber through the eversion nozzle by the action of the fluid pressure.

The present invention will be described in detail with reference to the attached drawings.

### Embodiment 1

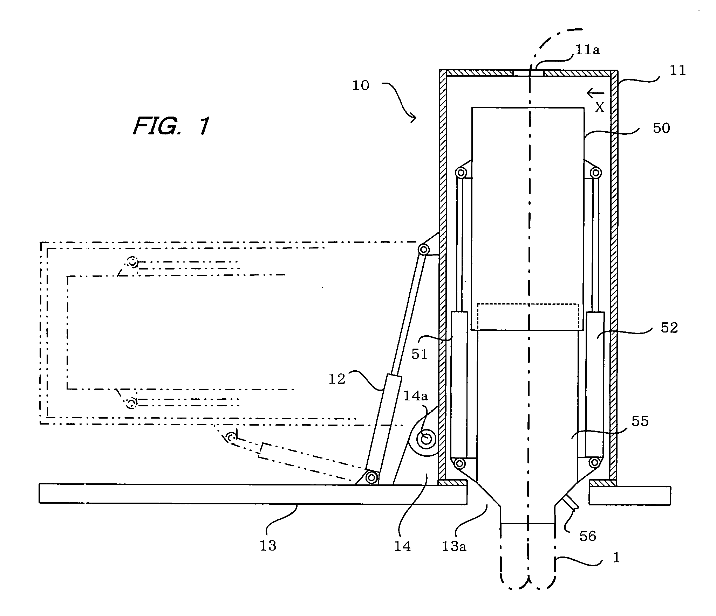

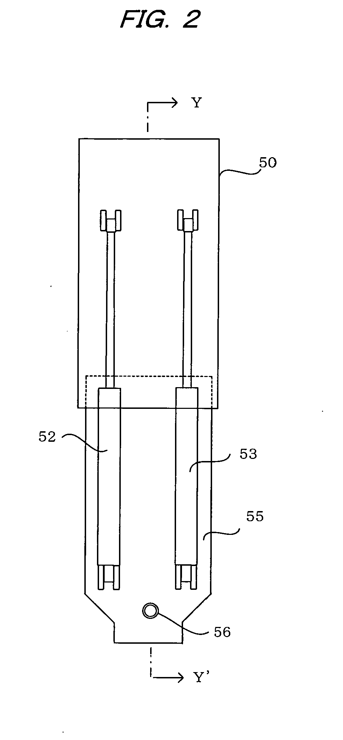

In FIG. 1 and FIG. 2, a pipe lining material eversion apparatus according to the present invention houses inside a casing 11 an upper part pressure chamber 50 and a lower part pressure chamber 55 that is provided with four lift jacks 51 - 53 (one of the lift jacks cannot be illustrated, and is therefore not shown) for raising and lowering the upper part pressure chamber 50. The entirety thereof is fixed to a base 13 through a support plate 14, and can rotate about a rotation shaft 14a via a moving jack 12, which is fixed to the base 13. The eversion apparatus can move, by means of the moving jack 12, between a vertical position (solid line), wherein the upper part pressure chamber 50 and the lower part pressure chamber 55 stand up and are lined up in the vertical direction, and a horizontal position (chain double dashed line), wherein both pressure chambers are lined up horizontally.

The eversion apparatus 10 is set to the normal horizontal position, loaded on a mobile vehicle and moved to the site, and is then stood up in the vertical state. In the position where the eversion apparatus 10 is standing up, the tip of the lower part pressure chamber 55 faces an open part 13a of the base 13, and a pipe lining material 1 is everted by the fluid pressure of a fluid (air) supplied through a pipe 56, as discussed later, and guided into a manhole (not shown) and the like.

The pipe lining material 1 is, for example, a well-known tubular pipe lining material that is comprised of a tubular resin adsorbing material impregnated with an uncured liquid setting resin with its outer surface airtightly coated by a plastic film. The eversion apparatus of the present invention is used to evert and insert the pipe lining material 1 from the manhole into a pipeline, and the pipe lining material is inflated by the fluid pressure, and pressed against the inner surface of the pipeline with the setting resin impregnated therein being cured to rehabilitate the pipeline. Normally, the pipe lining material 1 is wound around a reel or is in a folded state, transported to the position where the eversion apparatus 10 is installed, and guided into the upper part pressure chamber 50 through an open part 11a.

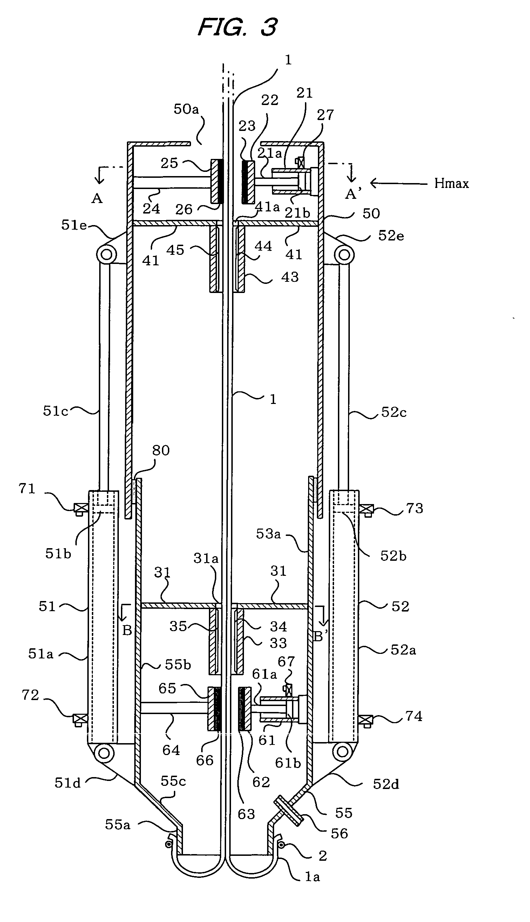

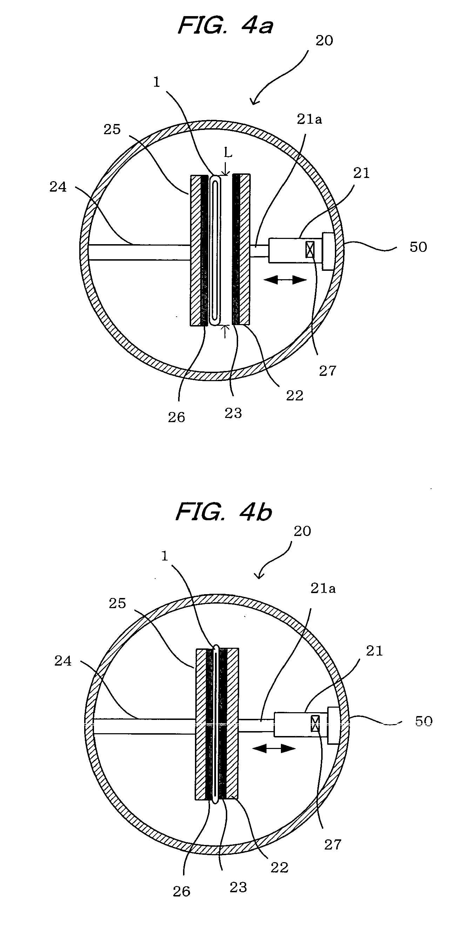

The upper part pressure chamber 50 (first pressure chamber) is substantially cylindrically shaped with its lower end open, as shown in FIG. 3, and has at its upper portion a rectangular open part 50a, through which the pipe lining material 1 can pass. A holding jack 21 is fixed to the upper part of the interior of the upper part pressure chamber, and a rectangular holding plate 22, which has a length substantially the same as the width L of the pipe lining material 1, is affixed to a piston rod 21a of the holding jack 21, as can be understood from FIG. 4. In addition, a holding member 23, which is made of an elastic material having a large coefficient of friction, e.g., rubber, is fixed to the surface of the holding plate 22 opposing the pipe lining material 1. Furthermore, a holding rod 24 is fixed to the surface of the upper part pressure chamber so that it opposes the holding jack 21. Affixed to the holding rod 24 is a holding plate 25 to which a holding member 26 that has the same shape and is made of the same material as the holding member 23 is fixed. Elements such as the holding jack 21 and the holding members 23, 26 constitute means for holding the pipe lining material.

The holding jack 21 functions as an oil pressure actuator, as discussed later, and takes a release position, wherein the holding member 23 is moved to the position shown in FIG. 4a, and a holding position, wherein such is moved to the position shown in FIG. 4b. When the holding jack 21 is at the release position, the pipe lining material 1 is released and can move freely. On the other hand, if it is at the holding position, the holding member 23 moves leftward and the pipe lining material 1 is firmly sandwiched by both the holding members 23 and 26 with its movement restrained, as shown in FIG. 4b. The switching between the holding position and the release position is performed by the switching of a solenoid switching valve, which switches by means of a proximity switch 27 that detects the proximity of a piston 21b, as discussed later.

The upper part pressure chamber 50 is raised and lowered between a highest position and a lowest position with respect to the lower part pressure chamber (second pressure chamber) 55 in the vertical direction by four lift jacks (moving means) 51 - 53. The lift jack 51 operates by oil pressure, the same as the holding jack 21, with its cylinder 51a affixed to a fixed block 51d mounted on the lower part of the lower part pressure chamber 55, and with its piston rod 51c affixed to a fixed block 51e, which is mounted on the upper part of the upper part pressure chamber 50. The lift jack 52 has a structure the same as that of the lift jack 51; the cylinder 52a of the lift jack 52 is affixed to a fixed block 52d, which is fixed to the lower part of the lower part pressure chamber 55, and the piston rod 52c of the lift jack 52 is affixed to a fixed block 52e, which is fixed to the upper part of the upper part pressure chamber 50. The other two lift jacks have the same structure. The lift jacks 51, 52 are provided with proximity switches 71, 72, 73, 74 that detect the proximity of pistons 51b, 52b. The other two lift jacks are likewise provided with the same proximity switches.

Meanwhile, the lower part pressure chamber 55 has a cylindrical eversion nozzle 55a at its lower part, a cylindrical part 55b at its upper part, and a conical part 55c therebetween. The lower part pressure chamber 55 is disposed so that its central axis extending in the vertical direction is coaxial with the central axis of the upper part pressure chamber 50, and is constituted so that the axes of both pressure chambers do not become offset even if the lift jacks raise and lower the upper part pressure chamber 50. A ring shaped sealing member 80 is affixed to the upper part of the lower part pressure chamber 55 to maintain a sealed structure as a whole even if the upper part pressure chamber 50 is moved.

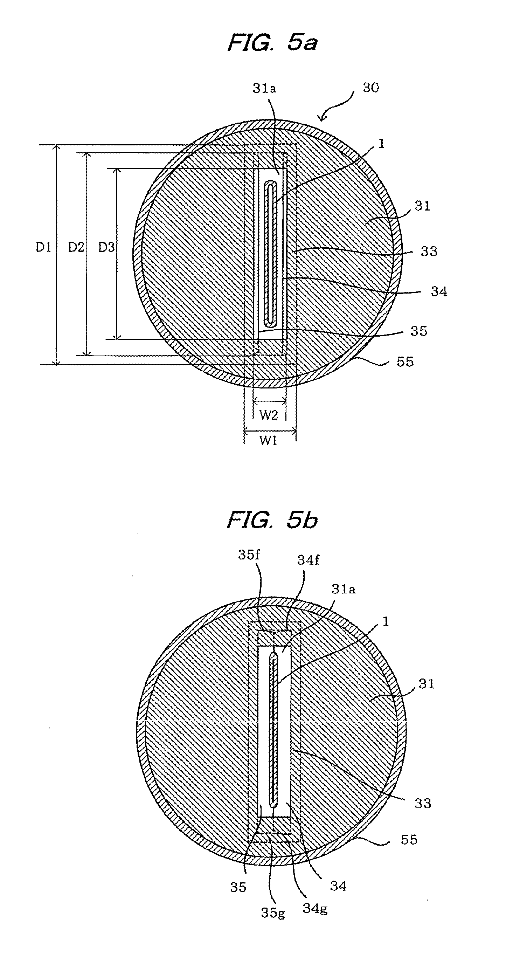

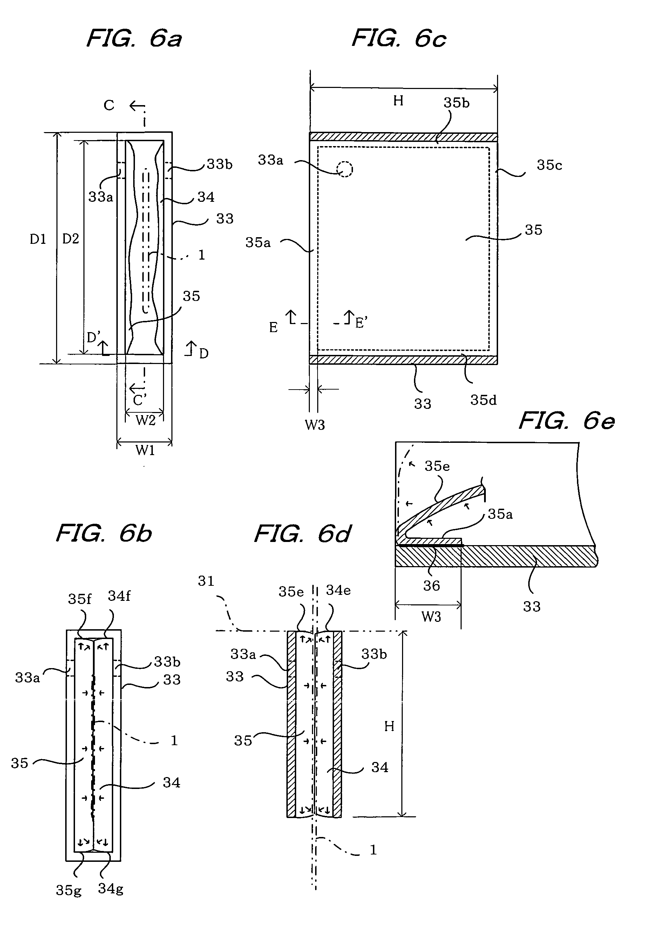

In the middle of the lower part pressure chamber 55, a circular sealing plate 31 of the type shown in FIG. 5 is airtightly affixed via a sealing member (not shown), and a transit port 31a, of a size through which the pipe lining material 1 can pass, is formed in the center of the sealing plate 31. In addition, as shown in detail in FIG. 6, a hollow sealed box 33 is airtightly affixed to the sealing plate 31 via a sealing member (not shown). The sealed box 33 has a rectangular parallelepiped shape with the long side D1, the short side W1, and the height H, and has a cavity with the long side D2, the short side W2, and the height H, so that the pipe lining material can pass therethrough. The transit port 31a, which is formed in the sealing plate 31, is a rectangular shape wherein the long side D3 is smaller than D2, and the short side has a width substantially the same as W2. When the sealed box 33 is affixed to the sealing plate, as shown in FIG. 5, it is aligned so that the short side of the transit port aligns with the short side of the cavity part of the sealed box, and the center of the long side of the transit port and the center of the long side of the cavity part coincide.

As shown in FIG. 6a, air bags 34, 35 are provided inside the sealed box 33 on both sides opposing the side surfaces of the pipe lining material 1. The air bags 34, 35 are made of a flexible plastic and, when inflated, function as sealed bags (pack valves), which sandwich and hold the pipe lining material 1 and seal the transit port 31a. As shown in FIG. 6e, an end part of the air bag 35 is folded back to the inner side by a width of W3, and that folded back portion 35a is airtightly bonded by an adhesive 36 to the interior side surface of the sealed box 33. Each of the other end parts of the air bag 35 are likewise folded back to the inner side, and each of the folded back portions 35b, 35c, 35d is airtightly bonded to the interior side surface of the sealed box 33 by the adhesive 36. This provides the air bag 35 with a structure wherein the four sides are airtightly sealed as shown in FIG. 6c. The other air bag 34 also has the same shape and is made of the same material as the air bag 35, and, like the air bag 35, the end part of each side is folded back and airtightly bonded to the interior side surface of the sealed box 33 by the adhesive 36.

The bonding of each folded back portion of each of the air bags can be made more reliable by applying fluid pressure (air pressure) to each air bag after bonding. In addition, the bonding of the air bags to the sealed box 33 is simplified if the sealed box is formed by dividing it into two members along the C-C' line in FIG. 6a, affixing an air bag to each member, and then aligning the cut parts and bonding the two members.

Provided in the sealed box 33 are air supply ports 33a, 33b, which supply compressed air into the air bags 34, 35. As discussed later, if compressed air is supplied from the supply ports, then the air bags 34, 35 change from a deflated state, as shown somewhat exaggeratedly in FIG. 6a, to an inflated state, as shown in FIG. 6b and 6d. When the air bags 34, 35 inflate, the pipe lining material 1 is interposed therebetween and airtightly held. In addition, when the air bags 34, 35 inflate, the portions ahead of the folded back portions thereof sharply stand up, as shown by the chain line in FIG. 6e, and those standing parts 34e and 35e tightly adhere to the rear side of the sealing plate 31 (interior side of the lower part pressure chamber). Because standing parts 34f, 34g and 35f, 35g on the side parts also tightly adhere to the side surfaces inside the hollow part of the sealed box 33, the transit port 31a of the sealing plate 31 shown in FIG. 5b changes into a sealed state, and the lower part pressure chamber 55 can thereby be made a sealed structure by those standing parts. Thus, the air bags function like a valve that opens and closes the transit port, and constitute the sealing means that seals the pipe lining material transit port of the pressure chamber. In the following, the position wherein the air bags are deflated and the transit port 31a of the sealing plate 31 changes to the open state is called the air bags open position, and the position wherein the air bags inflate and the transit port 31a of the sealing plate 31 changes into to the sealed state is called the air bags closed position.

A sealed structure is also provided to the upper part pressure chamber 50 by means of such air bags, and, like the lower part pressure chamber, comprises a sealing plate 41 with a transit port 41a, a sealed box 43, and air bags 44, 45. The sealing plate 41, the transit port 41a thereof, the sealed box 43, and the air bags 44, 45 are constituted the same as the sealing plate 31, the transit port 31a thereof, the sealed box 33, and the air bags 34, 35 of the lower part pressure chamber 55. When the air bags 44, 45 change to the open position, the transit port 41a opens, and when the air bags 44, 45 change to the closed position, the transit port 41a changes to the sealed state. If the lower part pressure chamber 55 changes to the sealed state and the air bags 44, 45 are in the closed position, then space between the pressure chambers 50, 55 is sealed by the sealing member 80, and the entirety of the upper part pressure chamber 50 and the lower part pressure chamber 55 constitutes a sealed structure.

Like the upper part pressure chamber, the lower part pressure chamber 55 is also provided with a holding mechanism comprising a holding jack 61 including a piston rod 61a; holding plates 62, 65 that hold holding members 63, 66; a holding rod 64; a proximity switch 67; and the like. The holding jack 61, the piston rod 61a thereof, the holding members 63, 66, and the holding plates 62, 65 have the same structure and the same function as the holding jack 21, the piston rod 21a, the holding members 23, 26, the holding plates 22, 25, the holding rod 24, and the proximity switch 27, respectively. When the holding jack 61 is in the holding position, the pipe lining material 1 is held and its movement is restrained. If, on the other hand, the holding jack 61 is in the release position, the pipe lining material is released and can therefore move freely.

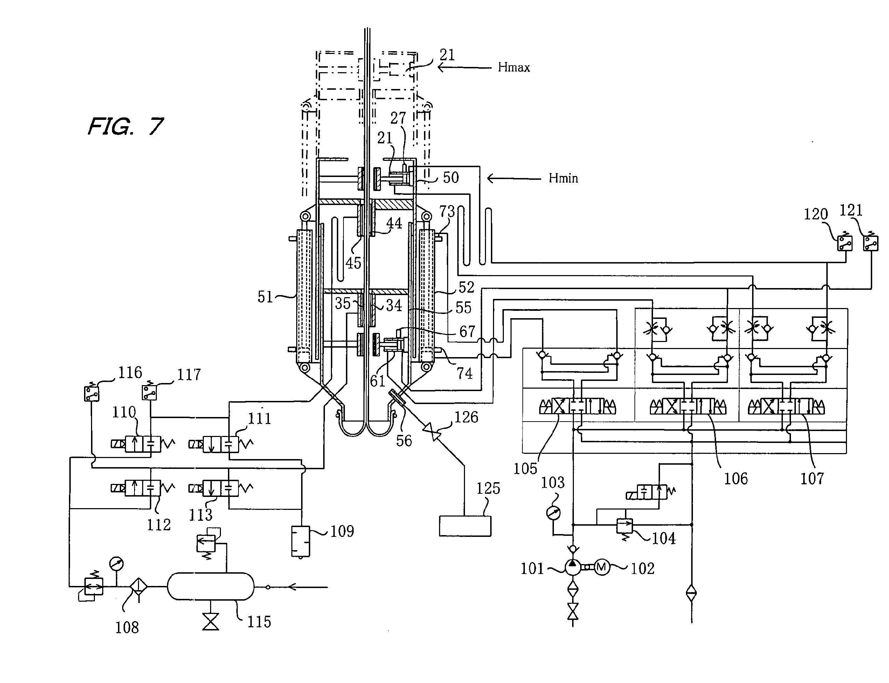

FIG. 7 shows a system diagram of an oil pressure system that supplies oil pressure to each of the jacks, and an air pressure system that supplies air pressure to the air bags.

In the oil pressure system, an oil hydraulic pump 101, which is driven by a motor 102, supplies an oil pressure medium (oil) through a lift jack solenoid switching valve 105 to the lift jack 52, through a holding jack solenoid switching valve 106 to the holding jack 61 of the lower part pressure chamber 55, and through a holding jack solenoid switching valve 107 to the holding jack 21 of the upper part pressure chamber 50. A pressure gauge 103 measures the oil pressure; if the oil pressure is excessive, then the oil pressure medium returns through a relief valve 104, thereby reducing the pressure. Only the oil pressure system leading to the lift jack 52 is shown in FIG. 7, but the oil pressure medium is supplied to the other three lift jacks by similar systems. In addition, the oil pressure system is provided with pressure switches 120, 121 that are operated when the holding pressure of the holding jacks 21, 61, is detected.

In the air pressure system, compressed air is stored in a pressure accumulator 115 via a control compressor, and the compressed air that has been pressure regulated via a regulator 108 is supplied to the air bags 45, 35 by solenoid switching valves 110, 112, respectively. On the other hand, the compressed air inside the air bags is released by solenoid switching valves 111, 113. Although the air pressure system leading to the air bags 44, 34 is not shown, its constitution is the same, and compressed air is supplied to and released from these air bags as well. The air pressure system is also provided with pressure switches 116, 117, which are operated when the air pressure inside the air bags is detected. Furthermore, a silencer is provided.

Compressed air for eversion is supplied from an eversion compressor 125 through a valve 126 to the lower part pressure chamber 55 through the pipe 56. The eversion compressor 125, the valve 126, the pipe 56, and the like constitute a fluid pressure supplying means that supplies fluid pressure (air pressure) to the pressure chambers.

With such a constitution, if the solenoid switching valve 105 switches from the holding position to the position on one side (right side position), then the oil pressure medium is supplied to a lower part cylinder chamber of the lift jack 52, likewise for the other lift jacks, and the upper part pressure chamber 50 therefore rises. If the proximity switch 73 detects the proximity of the piston 52b, then the solenoid switching valve 105 switches to the holding position, and the upper part pressure chamber 50 is held at the position (first position) shown by the chain line, wherein the holding jack 21 is at its highest position Hmax. Meanwhile, if the solenoid switching valve 105 switches to the position on the other side, then the oil pressure medium is supplied to an upper part cylinder chamber of the lift jack 52, likewise for the other lift jacks, and the upper part pressure chamber 50 therefore lowers. If the proximity switch 74 detects the proximity of the piston 52b, then the solenoid switching valve 105 switches to the holding position, and the upper part pressure chamber 50 is held at the position (second position) shown by the solid line, wherein the holding jack 21 is at its lowest position Hmin.

If the solenoid switching valve 106 switches to the position on one side (right side position), then the oil pressure medium is supplied to a left cylinder chamber of the holding jack 61, which moves the piston rod rightward. When the proximity switch 67 detects the proximity of the piston, the solenoid switching valve 106 switches to the holding position and the holding jack 61 is maintained at the release position. If the solenoid switching valve 106 switches to the other side, the oil pressure medium is supplied to a right cylinder chamber of the holding jack 61, and the piston rod moves leftward. When the pressure switch 121 detects a prescribed holding pressure, then the movement of the piston rod is stopped while maintaining that holding pressure, and the holding jack 61 is maintained at the holding position.

If, on the other hand, the solenoid switching valve 107 switches to the position on one side (right side position), then the oil pressure medium is supplied to a left cylinder chamber of the holding jack 21, which moves the piston rod rightward. When the proximity switch 27 detects the proximity of the piston 21b, the solenoid switching valve 107 switches to the holding position and the holding jack 21 is maintained at the release position. If the solenoid switching valve 107 switches to the other side, the oil pressure medium is supplied to a right cylinder chamber of the holding jack 21, and the piston rod moves leftward. When the pressure switch 120 detects a prescribed holding pressure, the movement of the piston rod is stopped while maintaining that holding pressure, and the holding jack 21 is maintained at the holding position.

Meanwhile, with the air pressure system, if the valve 126 opens, then the compressed air for eversion is supplied through the pipe 56 to the lower part pressure chamber 55, and that supply stops if the valve 126 closes.

If the solenoid switching valves 110, 112 switch, the compressed air is supplied to the air bags 45, 35, and the compressed air is likewise supplied to the other air bags 44, 34. Therefore, the air bags inflate and are maintained in the closed position. Furthermore, the air pressure at this time is held at a prescribed sealing pressure by the pressure switches 116, 117. If, however, the solenoid switching valves 111, 113 switch, the compressed air inside the air bags 45, 35 is released, the compressed air inside the air bags 44, 34 is likewise released, and each of the air bags deflates and changes to the open position.

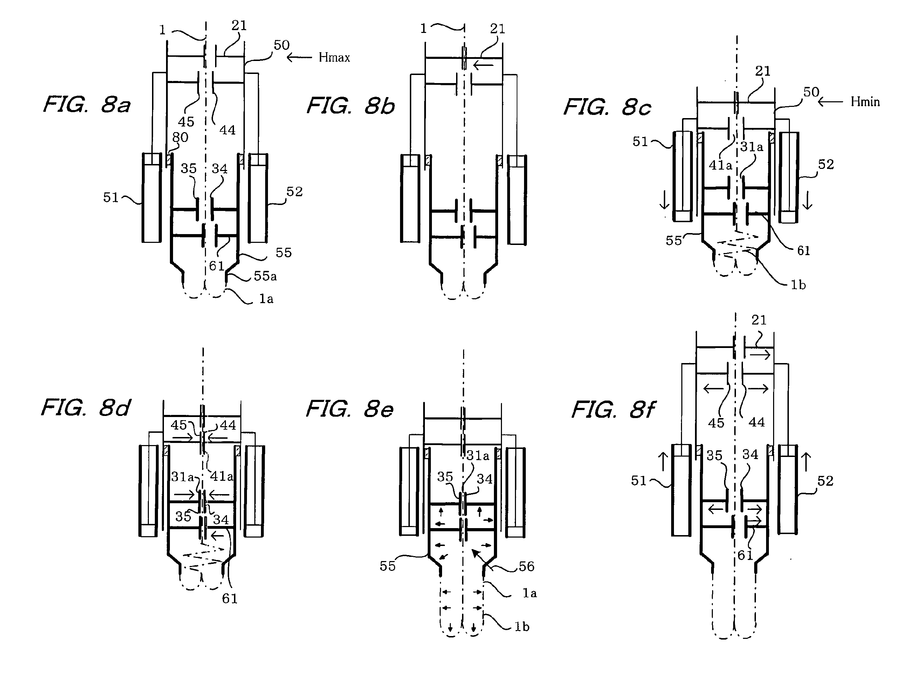

Referring now to FIG. 8, the operation of the eversion apparatus so constituted will be described. FIGS. 8a - 8f are for explaining the operation, and the detailed constitution and positional relationships are therefore not accurate but are illustrated in schematic form to facilitate the understanding of the operation. For example, the air bags 34, 35 and 44, 45 are illustrated in the form of open-close valves in FIG. 8. In addition, only two of the lift jacks (jacks 51, 52) are illustrated, but the other two lift jacks, including lift jack 53 (the other one has no reference symbol), operate likewise.

First, the solenoid switching valve 105 is switched to raise the lift jacks 51 and 52 and move them to the position (first position) where the holding jack 21 occupies the highest position Hmax, as shown in FIG. 8a. While raising the upper part pressure chamber 50, the corresponding solenoid switching valves are switched to set the holding jack 21 of the upper part pressure chamber 50 and the holding jack 61 of the lower part pressure chamber 55 to the release position. This decompresses the air bags 44, 45 of the upper part pressure chamber and the air bags 34, 35 of the lower part pressure chamber and sets the air bags to the open position, thereby forming a passageway through which the pipe lining material 1 can move downward.

Because a pathway is formed to the eversion nozzle 55a, the pipe lining material 1 is guided thereto by human power or labor saving equipment, and one end 1a thereof is subsequently folded back and airtightly attached to the outer circumference of the open end of the eversion nozzle 55a by a ring, a band 2, and the like. This state corresponds to FIG. 3.

It is to be noted that the upper part pressure chamber 50 can be lowered with the holding jack 21 operated to hold the pipe lining material and draw the pipe lining material into the interior of the upper part pressure chamber 50, so that the work of guiding one end of the pipe lining material to the eversion nozzle can also be performed so that one end of the pipe lining material is guided thereto by holding part of the pipe lining material with the holding jack 21, lowering the upper part pressure chamber 50, drawing in a prescribed amount of the pipe lining material, then releasing such, and then raising the upper part pressure chamber and repeating the same operation.

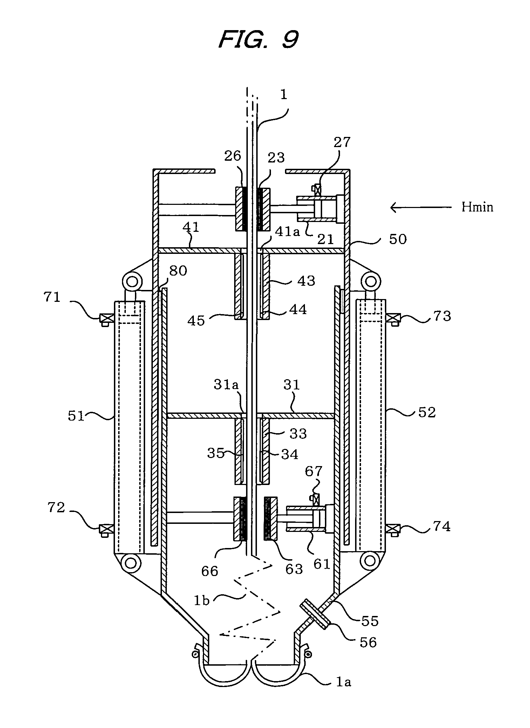

After the pipe lining material 1 is thus attached to the eversion nozzle 55a, the holding jack 21 of the upper part pressure chamber is moved to the holding position to hold the pipe lining material 1, as shown in FIG. 8b, and the lift jacks 51, 52 are lowered to lower the upper part pressure chamber 50 to the position (second position) where the holding jack 21 is at its lowest position Hmin, as shown in FIG. 8c. At this time, the transit port 41a of the upper part pressure chamber 50 and the transit port 31a of the lower part pressure chamber are open, and the holding jack 61 of the lower part pressure chamber is at the release position. Therefore, the pipe lining material 1, which is held by the holding jack 21 of the upper part pressure chamber, passes through the transit port 31a of the lower part pressure chamber 55 and is drawn therein, and one part 1b thereof is retained in a folded or bent state in the lower part pressure chamber 55. This state corresponds to FIG. 9.

Subsequently, as shown in FIG. 8d, the compressed air is supplied to the air bags 44, 45 of the upper part pressure chamber and the air bags 34, 35 of the lower part pressure chamber to set the air bags to the closed position and seal the transit parts 41a, 31a, respectively, thereby setting the upper part pressure chamber 50 and the lower part pressure chamber 55 to the sealed state. The holding jack 61 of the lower part pressure chamber is then moved to the holding position to hold the part of the pipe lining material 1 that is inside the lower part pressure chamber.

Furthermore, as shown in FIG. 8e, compressed air for eversion is supplied to the lower part pressure chamber 55 through the pipe 56. In the lower part pressure chamber 55, the air bags 34 and 35 airtightly sandwich the pipe lining material 1 to thereby seal the transit port 31a of the sealing plate 31 airtightly and hold the entire lower part pressure chamber 55 in the sealed state. Accordingly, the fluid pressure due to the compressed air supplied from the pipe 56 acts upon the lower part pressure chamber, and the pipe lining material 1 is thereby everted and drawn out of the lower part pressure chamber 55.

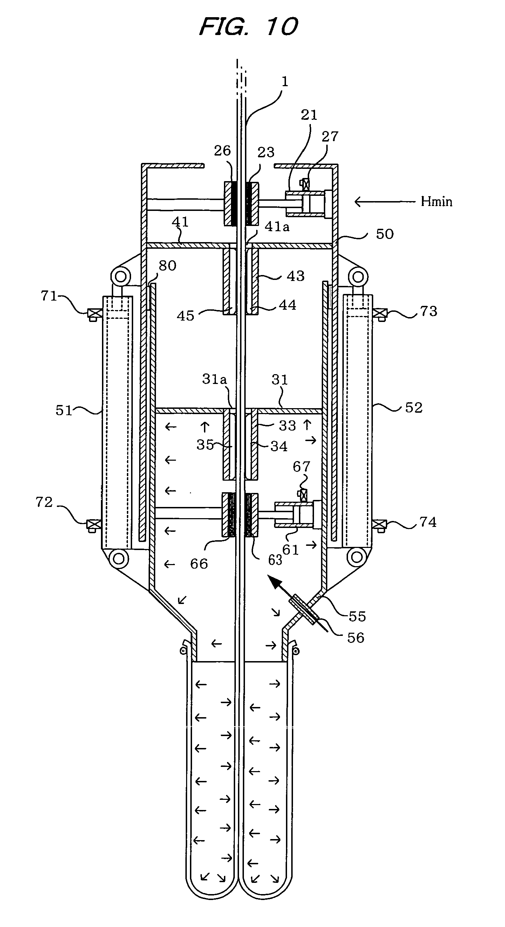

This state corresponds to FIG. 10, and the length of the pipe lining material 1 that is everted and drawn out from the lower part pressure chamber 55 corresponds to the stroke length by which the holding jack 21 moves from the highest position Hmax to the lowest position Hmin. It is to be noted that, when supplying the compressed air from the pipe 56, the air bags 44, 45 of the upper part pressure chamber 50 close the transit port 41a to hold the entire upper part pressure chamber 50 in the sealed state, so that, even in the event that the lower part pressure chamber 55, particularly at the portion of the transit port 31a, does not maintain a perfectly sealed state and the air leaks, it is possible to prevent an unfortunate marked reduction in the eversion pressure of the lower part pressure chamber.

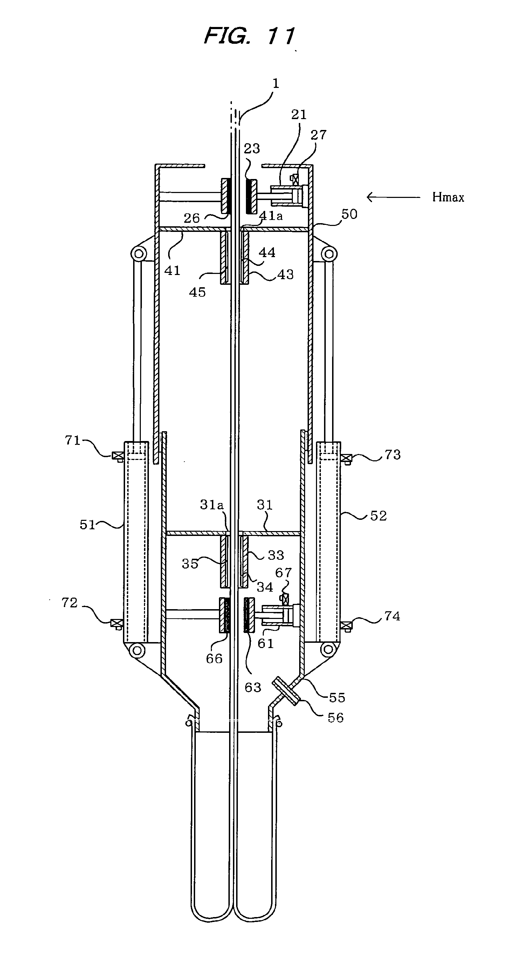

When a prescribed amount of the pipe lining material 1 is thus everted and drawn out, the supply of the compressed air to the lower part pressure chamber is stopped, and, as shown in FIG. 8f, each of the holding jacks 21, 61 moves to the release position, the air bags 34, 35, 44, 45 decompress, the transit ports 31a, 41a open, and the lift jacks 51, 52 move to the highest position. This state is illustrated in FIG. 11. Excepting the fact that a prescribed amount of the pipe lining material 1 is drawn out, the position of each of the members corresponds to FIG. 3 (FIG. 8a). The operations shown in FIGS. 8b - 8f are then repeated to successively evert and draw out the pipe lining material in proportion to the stroke by which the holding jack 21 moves from the highest position to the lowest position.

The following describes a construction method of rehabilitating an existing pipeline by using the eversion apparatus as explained above to evert the pipe lining material and insert it into the pipeline.

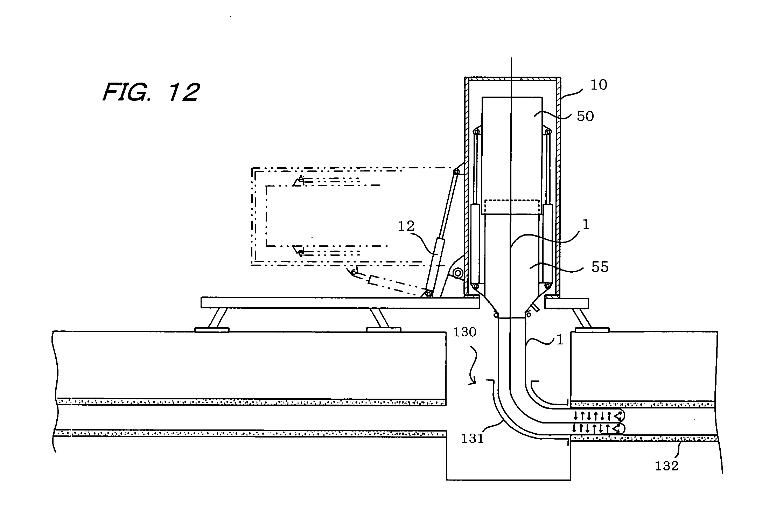

As shown in FIG. 12, the eversion apparatus 10 is transported to the site and disposed above a manhole 130 so that the upper part pressure chamber or the movement direction of the holding jack thereof orients to the vertical direction. Subsequently, the holding jack or the upper part pressure chamber is moved between the first and second positions, and, as discussed above, the upper part pressure chamber is lowered by a prescribed amount in order to draw the pipe lining material, which is held by the holding jack, into the lower part pressure chamber 55 in accordance with the movement of the holding jack. The pipe lining material is successively everted and drawn out from the eversion nozzle by that amount for insertion into the manhole 130, changed from the vertical direction to the horizontal direction by a bent pipe 131, inserted inside a pipeline 132 to be rehabilitated, and pressed against the inner surface of the pipeline 132 to be rehabilitated. Thereafter, as is well known, the pipe lining material is heated by hot water. That heat hardens the thermosetting resin impregnated in the pipe lining material 1, and the inner surface of the pipeline 132 is thereby lined and rehabilitated by the cured pipe lining material 1.

If the overall eversion apparatus can be made compact compared with the manhole, then the eversion apparatus can be laid sideways and inserted inside the manhole, and the eversion apparatus can be disposed inside the manhole so that the movement direction of the holding means or the upper part pressure chamber orients to the horizontal direction. In such a case, the eversion nozzle is oriented toward the entrance of the pipeline 132, and the pipe lining material is successively everted and drawn out from the eversion nozzle in accordance with the movement of the holding means or the upper part pressure chamber for insertion into the pipeline to thereby rehabilitate the inner surface thereof by the pipe lining material.

Furthermore, if the entire upper part pressure chamber is not raised or lowered by the lift jacks and instead the holding means (holding jack and the like) are directly raised or lowered, then the upper part pressure chamber can be omitted, and an even more compact eversion apparatus can be obtained.

In the embodiments discussed above, four lift jacks are provided. However, two units may be affixed radially opposed; alternatively, three units, or more than four units, may be provided and disposed equally spaced in the circumferential direction.

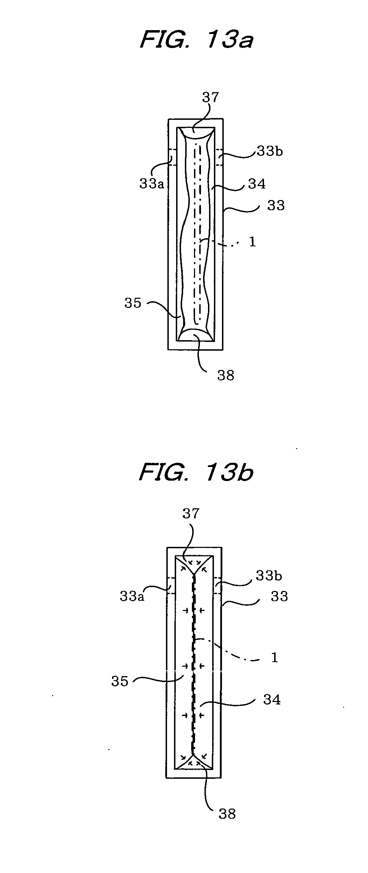

Furthermore, with the embodiments discussed above, two air bags 34, 35 are provided inside the sealed box and disposed so that they sandwich and hold the pipe lining material from two directions. However, as shown in FIGS. 13a and 13b, air bags 37, 38, which extend by a length the same as the air bags 34, 35 in the movement direction of the pipe lining material, can be airtightly mounted to the other two side surfaces inside the sealed box. Each of the air bags 34, 35, 37, 38 can be inflated by simultaneously supplying the compressed air thereto, and the seal of the transit port, through which the pipe lining material passes, can be further enhanced when the pipe lining material is interposed from four directions, as shown in FIG. 13b.

## Claims

1. A method for everting a pipe lining material in which a tubular pipe lining material is attached at its one end to the tip of an eversion nozzle and everted through the eversion nozzle by the action of fluid pressure, comprising the steps of:
providing a pressure chamber, which has a sealed structure and is provided with the eversion nozzle, with a transit port through which the pipe lining material passes;
passing the pipe lining material through the transit port and attaching one end of the pipe lining material to the eversion nozzle;
holding the pipe lining material at a first position by a holding means;
moving the holding means to a second position to draw the pipe lining material held by the holding means into the pressure chamber through the transit port;
sealing the transit port of the pressure chamber when the holding means has moved to the second position; and
applying the fluid pressure to the sealed pressure chamber to evert and draw out from the pressure chamber through the eversion nozzle the pipe lining material, which was drawn into the pressure chamber.

2. A method for everting a pipe lining material according to claim 1, further comprising the steps of:
releasing the holding of the pipe lining material by the holding means after everting and drawing out the pipe lining material from the pressure chamber;
opening the transit port;
returning the holding means to the first position;
subsequently holding the pipe lining material at the first position once again;
moving the holding means to the second position;
sealing the transit port; and
applying the fluid pressure;
wherein these processes are repeated to successively evert and draw out from the pressure chamber the pipe lining material, which was drawn into the pressure chamber.

3. A method for everting a pipe lining material according to claim 1 or 2, wherein the end part of the pipe lining material inside the pressure chamber positioned on the side opposite the eversion nozzle is held when the fluid pressure is applied to the sealed pressure chamber.

4. A method for everting a pipe lining material in which a tubular pipe lining material is attached at its one end to the tip of an eversion nozzle and everted through the eversion nozzle by the action of fluid pressure, comprising the steps of:
providing a first pressure chamber on which a holding means for holding the pipe lining material is mounted, and a second pressure chamber which has a sealed structure and is provided with the eversion nozzle;
forming at a position on the side opposite the eversion nozzle of the second pressure chamber a transit port through which the pipe lining material passes;
passing the pipe lining material through the transit ports of the first and second pressure chambers and attaching one end of the pipe lining material to the eversion nozzle;
holding the pipe lining material by the holding means in the first pressure chamber;
moving the first pressure chamber from a first position to a second position in the direction of the second pressure chamber to draw the pipe lining material, which is held by the holding means of the first pressure chamber, through the transit port of the second pressure chamber into the second pressure chamber;
sealing the transit port of the second pressure chamber when the first pressure chamber has moved to the second position; and
applying the fluid pressure to the sealed second pressure chamber to evert and draw out from the second pressure chamber through the eversion nozzle the pipe lining material, which was drawn into the second pressure chamber.

5. A method for everting a pipe lining material according to claim 4, further comprising the steps of:
releasing the holding of the pipe lining material by the holding means after everting and drawing out the pipe lining material from the second pressure chamber;
opening the transit port;
returning the first pressure chamber to the first position;
subsequently holding the pipe lining material at the first position once again;
moving the first pressure chamber to the second position;
sealing the transit port; and
applying the fluid pressure;
wherein these processes are repeated to successively evert and draw out from the second pressure chamber the pipe lining material, which was drawn into the second pressure chamber.

6. A method for everting a pipe lining material according to claim 4 or 5, wherein the end part of the pipe lining material inside the second pressure chamber positioned on the side opposite the eversion nozzle is held when the fluid pressure is applied to the sealed second pressure chamber.

7. A method for everting a pipe lining material according to any one of claims 4 through 6, wherein the entirety of the first and second pressure chambers are made sealed when the first pressure chamber has moved to the second position.

8. An apparatus for everting a pipe lining material in which a tubular pipe lining material is attached at its one end to the tip of an eversion nozzle and everted through the eversion nozzle by the action of fluid pressure, comprising:
a sealable pressure chamber provided at a position on the side opposite the eversion nozzle with a transit port through which the pipe lining material passes;
a holding means for holing the pipe lining material at a first position;
a means for moving the holding means to a second position so that the pipe lining material, which is held by the holding means, is drawn into the pressure chamber through the transit port;
a sealing means that seals the transit port of the pressure chamber when the holding means moves to the second position; and
a fluid pressure supplying means that supplies fluid pressure to the sealed pressure chamber;
wherein the pipe lining material, which was drawn into the pressure chamber, is everted and drawn out from the pressure chamber through the eversion nozzle by the action of the fluid pressure.

9. An apparatus for everting a pipe lining material according to claim 8, wherein the holding of the pipe lining material by the holding means is released after the pipe lining material has been everted and drawn out from the pressure chamber, and the holding means is moved back to the first position in order to start the drawing of the pipe lining material into the pressure chamber once again.

10. An apparatus for everting a pipe lining material according to claim 8 or 9, further comprising a holding means that holds an end part of the pipe lining material inside the pressure chamber positioned on the side opposite the eversion nozzle.

11. An apparatus for everting a pipe lining material in which a tubular pipe lining material is attached at its one end to the tip of an eversion nozzle and everted through the eversion nozzle by the action of fluid pressure, comprising:
a first pressure chamber on which a holding means that holds the pipe lining material is mounted;
a sealable second pressure chamber provided at a position on the side opposite the eversion nozzle with a transit port through which the pipe lining material passes;
a means for moving the first pressure chamber from a first position to a second position in the direction of the second pressure chamber so that the pipe lining material, which is held by the holding means of the first pressure chamber, is drawn into the second pressure chamber through the transit port of the second pressure chamber;
a sealing means that seals the transit port of the second pressure chamber when the first pressure chamber moves to the second position; and
a fluid pressure supplying means that supplies fluid pressure to the sealed second pressure chamber;
wherein the pipe lining material, which was drawn into the second pressure chamber, is everted and drawn out from the second pressure chamber through the eversion nozzle by the action of the fluid pressure.

12. An apparatus for everting a pipe lining material according to claim 11, wherein the holding of the pipe lining material by the holding means is released after the pipe lining material has been everted and drawn out from the second pressure chamber, and the first pressure chamber is moved back to the first position in order to start the drawing of the pipe lining material into the second pressure chamber once again.

13. An apparatus for everting a pipe lining material according to claim 11 or 12, further comprising a holding means that holds an end part of the pipe lining material inside the second pressure chamber positioned on the side opposite the eversion nozzle.

14. An apparatus for everting a pipe lining material according to any one of claims 11 through 13, wherein the entirety of the first and second pressure chambers are made sealed when the first pressure chamber has moved to the second position.

15. A construction method for rehabilitating a pipeline in which the eversion apparatus as set forth in claim 8 or 11 is used to evert a pipe lining material and insert it into an existing pipeline, comprising the steps of:
disposing the eversion apparatus above a manhole so that a movement direction of the holding means orients to a vertical direction;
inserting into the manhole the pipe lining material which has been successively everted and drawn out from the eversion nozzle of the eversion apparatus in accordance with the movement of the holding means or the first pressure chamber between the first and second positions;
changing the orientation of the pipe lining material from the vertical direction to the horizontal direction to insert the pipe lining material, which was inserted into the manhole, into the pipeline to be rehabilitated; and
rehabilitating the inner surface of the pipeline by the pipe lining material.

16. A construction method for rehabilitating a pipeline in which the eversion apparatus as set forth in claim 8 or 11 is used to evert a pipe lining material and insert it into an existing pipeline, comprising the steps of:
disposing the eversion apparatus inside a manhole so that a movement direction of the holding means orients to a horizontal direction;
inserting into the pipeline to be rehabilitated the pipe lining material which has been successively everted and drawn out from the eversion nozzle of the eversion apparatus in accordance with the movement of the holding means or the first pressure chamber between the first and second positions; and
rehabilitating the inner surface of the pipeline by the pipe lining material.
